# EUROPEAN PATENT APPLICATION

(11) **EP 4 770 098 A1**
(43) Date of publication of application: **01.07.2026**
(21) Application number: 24223300.5
(22) Date of filing: 26.12.2024
(51) Int. Cl.: H04N 21/2183, H04N 21/262, H04N 21/845

(54) **A SYSTEM AND METHOD FOR EXTENDING A TIMESHIFT BUFFER IN DYNAMIC ADAPTIVE STREAMING OVER HTTP (DASH)**

(71) Applicant: Advanced Digital Broadcast S.A., 1293 Bellevue (CH)
(72) Inventor: TRYBUS, Michal, 65-119 Zielona Gora (PL); TORBUS, Mateusz, 65-119 Zielona Gora (PL); ZUBOWICZ, Czeslaw, 65-119 Zielona Gora (PL)
(74) Representative: Kancelaria Eupatent.pl Sp. z o.o.

(57) **Abstract**

A method of controlling the streaming of content to a client (300) from a content source (100) using a Dynamic Adaptive Streaming over HTTP (DASH) protocol, the method comprising, at an intermediate device (200) located between the content source (100) and the client (300): receiving a manifest file (310) from the content source (100) in response to a request from the client (300) and editing the received manifest file (310) before delivering it to the client (300), the manifest file (310) including at least one Uniform Resource Identifier (URI) identifying a content element, characterized in that the method further comprises: maintaining, at the intermediate device (200), a local cache (210) of previously obtained segments of the content element; augmenting the manifest file (310) with information from a previously stored version of a manifest for the same content element, retrieved from a memory (230), that includes older segment references not present in the received manifest file (310), so as to extend an available timeshift duration beyond the timeshift depth visible in the received manifest; removing, from the augmented manifest, outdated periods (320) and segment references within a SegmentTimeline (350) whose end times precede a selected cutoff, thereby pruning obsolete content while preserving a continuous timeline of available segments; cleaning the augmented manifest by removing all BaseURL elements, performing SegmentTemplate inheritance for representations (340), and substituting original media and initialization segment references with relative URL placeholders that refer to the locally cached segments in the local cache (210); and updating manifest attributes, including a timeShiftBufferDepth attribute and UTCTiming elements (311), to signal to the client (300) that a locally extended timeshift buffer is available, thereby enabling the client (300) to access historical segments beyond the timeshift depth initially provided by the content source (100).

## Description

### TECHNICAL FIELD

The present invention relates to systems and methods for handling adaptive streaming of audiovisual content over networks, specifically for Dynamic Adaptive Streaming over HTTP (DASH). More particularly, the invention concerns techniques for extending a timeshift buffer beyond what is provided by a live content source, enabling clients to navigate further back in time than the original live stream configuration would allow.

### BACKGROUND

Dynamic Adaptive Streaming over HTTP (DASH) allows clients to access live or on-demand media content by retrieving segments over standard HTTP protocols. For live streaming scenarios, DASH typically provides a limited timeshift buffer, meaning clients can rewind and view only a short history of previously broadcast segments. Such constraints may arise from the content source configuration, which frequently updates the manifest but discards older references as time moves forward.

Traditional approaches rely solely on the content source's manifest, giving the client no means to retrieve segments that have aged out of the active timeshift window. While some known solutions involve editing manifest files or caching popular segments at network elements, they do not combine these strategies to reconstruct and present an extended timeshift window to the client in a compliant, seamless manner. Consequently, viewers cannot easily navigate back to older segments once the source manifest ceases to reference them.

There is thus a need for a solution that allows an intermediate device situated between the content source and the client to store and manage older segments, merge them into newly received manifests, and present to clients a locally extended timeshift buffer, thereby enhancing user viewing flexibility and experience.

### SUMMARY

In accordance with embodiments of the present invention, there are provided systems, methods, and apparatus for extending timeshift buffers in dynamic adaptive streaming scenarios. By storing and merging previously obtained content segments not referenced by a live content source's manifest with newer updates, the invention enables clients to navigate a deeper historical playback window than is originally available. The invention further provides algorithms to seamlessly integrate older content, remove outdated segments, clean up references, and signal updated attributes to clients. These and other features, aspects, and advantages of the present invention will become better understood with reference to the following description and claims.

In one aspect, the invention relates to a method of controlling the streaming of content to a client from a content source using a Dynamic Adaptive Streaming over HTTP (DASH) protocol. In this method, an intermediate device located between the content source and the client initially receives a manifest file in response to the client's request and edits it before delivering it to the client. Beyond these known approaches, the method further includes maintaining a local cache of previously obtained segments of the content, augmenting the manifest with older segment references that are no longer present in the current live manifest, removing outdated periods and segment references from the augmented manifest, cleaning the manifest by removing BaseURL elements and performing SegmentTemplate inheritance, and finally updating attributes such as the time shift buffer depth and UTCTiming. By doing so, the method provides the advantage that the client gains access to a locally extended timeshift buffer, enabling navigation further back in time than originally provided by the source manifest and thereby enhancing the user experience.

In another aspect, the method involves merging missing segment references from previously stored manifest versions with the currently received manifest. This ensures that the older segments are reintroduced seamlessly, granting the advantage of a more continuous and extended historical playback window that was otherwise unavailable.

Further aspects of the method include decompressing segment timelines to identify and remove outdated segments before re-compressing them. This refined manipulation of segment references ensures the manifest remains efficient, logically consistent, and accurately reflects only relevant segments, providing the advantage of reduced complexity and improved manageability for long-term streaming sessions.

In yet another aspect, the cleaning process can involve recursively removing BaseURL elements from all levels of the manifest. This simplifies the manifest structure and ensures that all references to content are relative to the intermediate device's local cache, giving the advantage of more efficient local segment retrieval and reduced dependency on remote paths.

A further aspect includes updating manifest attributes such as MPD@minimumUpdatePeriod. By specifying when future manifest updates are expected, the client can optimize its behavior in anticipating changes, offering the advantage of smoother playback transitions and minimized buffering events.

Another aspect comprises periodically obtaining new manifest versions from the content source and merging them with previously stored data. This ongoing updating process continuously maintains an extended timeshift buffer. The advantage is that the viewer can always access an extended historical timeline without interruption, enhancing the perceived reliability and richness of the streaming service.

Additionally, the method can serve any requested segments directly from the local cache whether they are still referenced by the current manifest from the source or not. The advantage here is immediate access to historical content, reduced network load, and improved responsiveness in delivering segments preceding live-edge.

In another aspect, the invention relates to a system for controlling content streaming using the DASH protocol. This system includes an intermediate device arranged between the content source and the client, configured to receive a manifest file and send an edited version of it to the client. The system goes beyond basic editing by maintaining a local cache of previously obtained segments, merging older segment timeline data to extend the timeshift duration, removing outdated segments and periods, performing a cleaning procedure, and updating attributes like the timeShiftBufferDepth and UTCTiming. The advantage of this system is that it transforms the live streaming environment into one where the client can enjoy a more extended historical playback window with minimal changes to the existing infrastructure.

Further aspects of the system relate to decompressing and recompressing SegmentTimeline entries for efficient run-length encoding. By doing so, the system ensures the manifest remains compact and efficient, providing the advantage of better resource usage and easier manifest processing.

Another aspect of the system involves recursively removing BaseURL elements at multiple hierarchy levels. The advantage is a cleaner, locally oriented addressing structure that streamlines retrieval of all segments from the intermediate device's cache rather than multiple remote URLs.

Additionally, the system may periodically retrieve updated manifest versions and merge them with previously stored data, maintaining the extended timeshift buffer continuously. This yields the advantage of an adaptive environment that automatically adjusts to ongoing changes in the content source's manifest, ensuring a persistently rich and extended timeline for the client.

In another aspect of the system, a timing controller can set MPD@minimumUpdatePeriod, offering the advantage of predictable and manageable updates that facilitate smooth client adaptation to manifest changes.

Additionally, the system can correct or compensate for situations in which the source manifest does not properly reference segments that should remain available according to DASH normative requirements. By augmenting the manifest to include references to older segments that were previously omitted, the system ensures that the client can legitimately request and obtain these segments from the local cache. This capability effectively handles non-conforming or prematurely truncated manifests by presenting a continuous and extended timeline of segments, thus maintaining compliance with standards and preserving the intended viewing experience.

Finally, the system may implement the AUGMENT, REMOVE, and CLEAN procedures in succession. By doing so, it continuously presents a coherent and extended timeshift buffer to the client, resulting in the advantage of sustained historical depth in playback options and a significant enhancement of the overall user viewing experience.

In embodiments, the methods described herein are performed by or on a computing device including at least one processor and a memory coupled to the processor, the memory storing instructions which, when executed by the processor, cause the processor to perform the steps of the method. Such a computing device may be a server, network appliance, gateway, or other intermediate node configured for streaming media processing, and may communicate over a network using standard protocols. The processor, executing the instructions stored in the memory, orchestrates the retrieval, augmentation, removal, cleaning, and updating of manifest data as described, and manages interactions with the local cache to provide extended timeshift functionality.

It should be understood that the systems and methods described herein provide specific technological improvements in the field of dynamic adaptive streaming over HTTP (DASH). The techniques disclosed are rooted in computer network technology to overcome problems specifically arising in live content streaming environments, such as limited timeshift depth and inefficient retrieval of older segments.

More specifically, the invention is implemented in a particular technical context involving a network-based intermediate device, data caching mechanisms, and conforming to internationally recognized standards (e.g., ISO/IEC 23009-1 :2019 for DASH). The disclosed AUGMENT, REMOVE, and CLEAN algorithms operate on manifest data structures in a structured, computer-executed manner. By transforming an original manifest into an augmented one with extended timeshift depth, pruning stale references, and rewriting URLs as placeholders that reference locally cached segments, the invention provides a tangible technical solution that improves the reliability, scalability, and efficiency of live streaming systems.

The invention reduces bandwidth consumption over wide area networks, improves playback continuity for end-users, and adapts to changes in network conditions, all of which yield concrete technical benefits. Thus, these methods and systems produce a practical application of underlying principles to a technological environment, going well beyond any mere generic computer implementation.

In addition, the invention's steps are performed by computing hardware, software modules, or a combination thereof, interacting over a network, reading and writing data from or to a local cache, and conforming to specified protocols and standards. These technical features ensure that the invention is integrally tied to a particular technological environment.

Accordingly, the claims set forth herein recite a technical solution to a technical problem in streaming media distribution.

### BRIEF DESCRIPTION OF DRAWINGS

The present invention is shown by means of detailed embodiments shown in a drawing, wherein:
FIG. 1 depicts a system architecture including a content source, an intermediate device, and clients, illustrating how the intermediate device extends the timeshift buffer.
FIG. 2 shows a block diagram of the intermediate device, including a manifest reconstruction module and local cache, for implementing the AUGMENT, REMOVE, and CLEAN algorithms.
FIG. 3 provides an example of a DASH MPD manifest after processing by the intermediate device, highlighting the integration of older segment references and the extended timeshift timeline.
FIG. 4 is a flowchart illustrating the AUGMENT algorithm, showing how older segment timelines and periods are merged into the new manifest.
FIG. 5 is a flowchart illustrating the REMOVE algorithm, which prunes outdated segments and periods to maintain a consistent timeshift depth.
FIG. 6 is a flowchart illustrating the CLEAN algorithm, ensuring that references point to locally cached segments and removing extraneous BaseURL elements.
FIG. 7 compares a manifest before and after the application of AUGMENT, REMOVE, and CLEAN, demonstrating the transformation from a source-dependent to a locally enriched, extended-timeshift manifest.
FIG. 8A provides a simplified representation of a DASH manifest before and after signaling attribute updates, reflecting how the intermediate device sets parameters such as timeShiftBufferDepth and UTCTiming.
FIG. 8B is a flow diagram illustrating the steps taken by the intermediate device to achieve the updated signaling attributes shown in FIG. 8A.
FIG. 9 shows a sequence of interactions among the client, intermediate device, and content source, demonstrating how the client retrieves older and newer segments, with the intermediate device serving as a transparent source of extended timeshift content.

The following detailed description of illustrative embodiments is provided to enable a skilled person to make and use the invention. Various modifications, equivalents, and alternatives are also contemplated, and the scope of the present invention is intended to cover any such modifications, equivalents, and alternatives. Although certain specific details are set forth, it is understood that various embodiments may be practiced without these specific details. Wherever possible, like reference numerals are used to indicate like parts.

### DETAILED DESCRIPTION

It should be understood that the embodiments described herein are given by way of example only and are not intended to limit the scope of the invention. Many variations are possible without departing from the spirit and scope of the invention, as defined by the appended claims. In particular, although the invention is described with reference to certain illustrative network architectures, caching strategies, and manifest processing algorithms, it is understood that the invention is equally applicable to other streaming protocols, network configurations, segment addressing methods, or content distribution approaches.

DASH is defined by the ISO/IEC 23009-1 standard ("Information technology - Dynamic adaptive streaming over HTTP (DASH) - Part 1: Media presentation description and segment formats"). The version ISO/IEC 23009-1:2019 (on which the implementation described herein is based) provides the normative framework for describing media presentations, segment availability, and parameters for live and on-demand adaptive streaming scenarios. This standard enables clients to adapt to varying network conditions by switching between different bit rates of media segments delivered over HTTP.

DASH builds upon established internet protocols and streaming practices. At the transport level, the Hypertext Transfer Protocol (HTTP) serves as the foundational mechanism for segment retrieval. The HTTP/1.1 specification, as standardized by the Internet Engineering Task Force (IETF) in RFC 7230 (June 2014), and subsequent updates such as RFC 9110 (June 2022), ensure reliable, connection-oriented data transfers over TCP/IP networks. These HTTP-based transfers allow clients to dynamically request segments at the appropriate quality level.

In addition, DASH integrates with underlying container and encoding standards defined by the Moving Picture Experts Group (MPEG). For example, video and audio codecs and file formats may be aligned with ISO/IEC 14496 (MPEG-4) standards and their amendments. The combination of MPEG's codec standards and the DASH specification facilitates interoperability and ensures consistent quality of service and user experience across diverse platforms and network conditions.

Thus, the present invention, which involves extending the timeshift buffer beyond the source-provided depth, is implemented with respect to established standards including ISO/IEC 23009-1:2019 for DASH, IETF RFC 7230 and RFC 9110 for HTTP, and related MPEG standards for audiovisual coding and file formats. By adhering to these internationally recognized standards, the invention ensures compatibility, scalability, and efficient operation in modern adaptive streaming ecosystems.

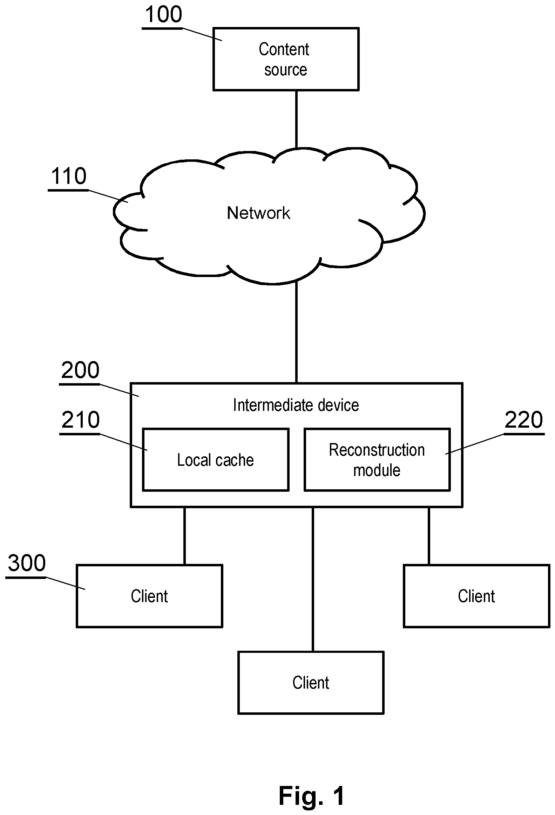

Referring to FIG. 1, there is shown a system for delivering dynamic adaptive streaming content via a network infrastructure. A content source 100 provides a live DASH manifest and associated media segments and is connected through a network 110 to an intermediate device 200. The content source 100 is typically configured to generate updates to the manifest and corresponding media segments on an ongoing basis, but maintains only a limited timeshift buffer as defined by standard live streaming parameters.

The intermediate device 200 is arranged in a data path between the content source 100 and one or more clients 300. The intermediate device 200 includes a local cache 210, which stores previously downloaded segments that may no longer be referenced by the latest manifest received from the content source 100. By maintaining these older segments locally, the intermediate device 200 effectively extends the available timeshift window beyond that offered by the content source 100.

The intermediate device 200 further comprises a manifest reconstruction module 220 configured to process and transform the manifest received from the content source 100. This processing includes the application of AUGMENT, REMOVE, and CLEAN algorithms (described in detail elsewhere) to combine segment references from older, locally cached manifest data with newer updates from the content source 100. The manifest reconstruction module 220 removes outdated information, integrates previously cached segments, and adjusts references to ensure compliance with DASH specifications. Once the processing is complete, the intermediate device 200 provides an updated and augmented manifest, signaling an extended timeshift buffer to the clients 300.

The clients 300, which may be DASH-compliant players integrated into various user devices such as televisions, smartphones, or computers, receive from the intermediate device 200 the augmented manifest and request segments accordingly. Because the intermediate device 200 serves these segments either directly from its local cache 210 or, if needed, by retrieving new segments from the content source 100, the clients 300 perceive a continuous, extended window of historically available content that exceeds the timeshift depth originally provided by the content source 100.

In operation, the intermediate device 200 periodically updates its local cache 210 and the manifest reconstruction module 220 to maintain the extended timeshift window. As a result, the clients 300 can navigate farther back in time than would otherwise be possible if they were connected directly to the content source 100, thereby providing enhanced viewing flexibility and user experience.

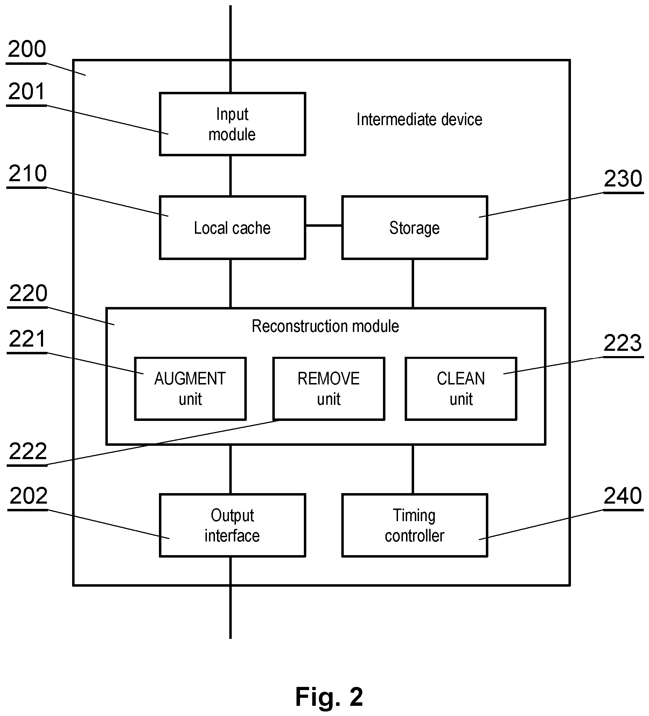

Referring now to FIG. 2, there is shown a more detailed block diagram of the intermediate device 200 introduced in FIG. 1. The intermediate device 200 is configured not only to intercept and edit manifests originating from the content source 100, but also to implement algorithms that extend the available timeshift buffer.

The intermediate device 200 comprises an input interface 201 for receiving updated manifests and associated segments from the content source 100 over the network 110. A local cache 210 is accessible to store previously downloaded segments that may have aged out of the currently published manifest from the content source 100. A memory or database storage area 230 may hold previously obtained manifest information, including older SegmentTimeline data.

Central to the invention is the manifest reconstruction module 220, which includes at least three specialized units:
An AUGMENT unit 221 for merging current manifest data with older segment information retrieved from the previously cached manifests in 230 and segments from the local cache 210. The AUGMENT unit 221 ensures that the newly formed manifest includes references to older segments not listed in the current live manifest, thus extending the timeshift window.

A REMOVE unit 222 for pruning outdated segments and removing entire periods that lie outside the desired timeshift window. By discarding segment references earlier than a selected cutoff time, the REMOVE unit 222 keeps the extended timeline coherent and free of stale data.

A CLEAN unit 223 which finalizes the augmented manifest by removing all BaseURL elements, performing SegmentTemplate inheritance, and replacing original segment references with relative placeholders pointing to segments cached locally in 210. This ensures that the client 300 can seamlessly fetch extended-timeshift segments from the intermediate device 200.

The intermediate device 200 also includes a manifest output interface 202, through which it provides the augmented and cleaned manifest to the requesting client 300, as well as segments served either from the local cache 210 or newly acquired ones. Additionally, the intermediate device 200 may incorporate a timing controller 240, which updates UTCTiming elements and sets the MPD@timeShiftBufferDepth attribute to reflect the newly available extended timeshift window.

In operation, when the intermediate device 200 receives a fresh manifest from the content source 100 at the input interface 201, it accesses the local cache 210 and stored historical manifest data 230. The AUGMENT unit 221, REMOVE unit 222, and CLEAN unit 223 process these inputs to produce a continuous, extended segment timeline. As a result, the final manifest delivered via output interface 202 presents the client 300 with a deeper timeshift buffer than originally advertised by the content source 100, enabling enhanced user playback flexibility.

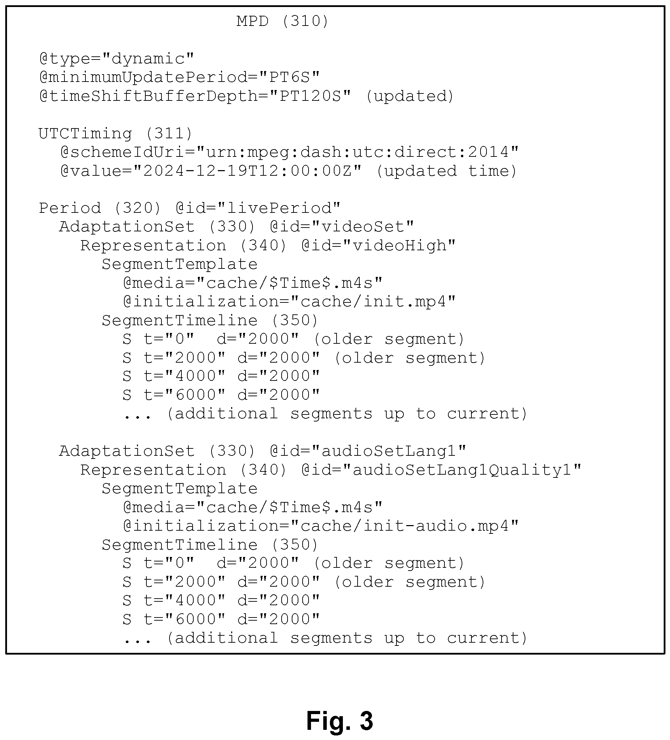

Referring now to FIG. 3, there is shown an example of a DASH Media Presentation Description (MPD) manifest as processed by the intermediate device 200. The figure emphasizes how older segment references are integrated alongside the currently available segments provided by the content source 100, thereby extending the timeshift depth visible to the client 300.

At the top level, a root MPD element 310 includes global attributes such as MPD@type, MPD@minimumUpdatePeriod, and MPD@timeShiftBufferDepth. Initially, when the manifest is received from the content source 100, it contains a short timeshift window. After augmentation and cleaning, the intermediate device 200 updates MPD@timeShiftBufferDepth to reflect the newly extended window and may also insert updated UTCTiming elements 311 that report the current network time at retrieval.

Within the MPD, one or more Period elements 320 define temporal sections of the presentation. For a live stream, the latest Period might reflect the currently "live" portion of the content. Through the AUGMENT and REMOVE algorithms applied in the intermediate device 200, older Periods previously discarded by the content source 100 are retrieved and seamlessly reintroduced into the manifest, or the earliest segments of the first retained Period are extended backward in time. Thus, Period elements 320 in the augmented manifest represent a continuous timeline reaching further into the past than the source manifest.

Inside each Period 320, one or more AdaptationSet elements 330 group Representations of a common media type (e.g., video, audio). Within each AdaptationSet 330, multiple Representation elements 340 may exist, each referencing a distinct quality level or codec. Unlike the prior art's approach of simply adding or removing URIs for representations, the present invention's CLEAN process ensures that SegmentTemplates in these Representation elements 340 are inherited and adjusted to reference local placeholders. Instead of pointing back to the content source 100, the placeholders direct the client 300 to retrieve segments from the intermediate device's local cache 210.

A key feature highlighted in FIG. 3 is the SegmentTimeline element 350. The AUGMENT algorithm retrieves older S elements (segment timeline entries) that correspond to segments cached locally, but no longer advertised by the current manifest from the content source 100. These previously dropped S elements are appended or merged into the existing SegmentTimeline 350, forming a longer, continuous timeline. The REMOVE algorithm ensures that only segments newer than a selected cutoff remain, preventing the timeline from growing indefinitely.

After the CLEAN algorithm, BaseURL elements are removed and SegmentTemplate attributes (e.g., @media, @initialization) are replaced by relative placeholders. Hence, the final manifest shows a unified, extended SegmentTimeline 350 populated with continuously accessible segments. The client 300 interpreting the manifest sees an elongated historical playback window and can request segments from earlier times as if they were still part of the "live" offering.

By comparison to the prior art figures, FIG. 3 focuses on illustrating the structural changes at the manifest level-specifically, the extended SegmentTimeline, updated Period references, and rewritten URLs to locally cached content-all of which enable a client 300 to navigate backward in time beyond what the content source 100 originally provided.

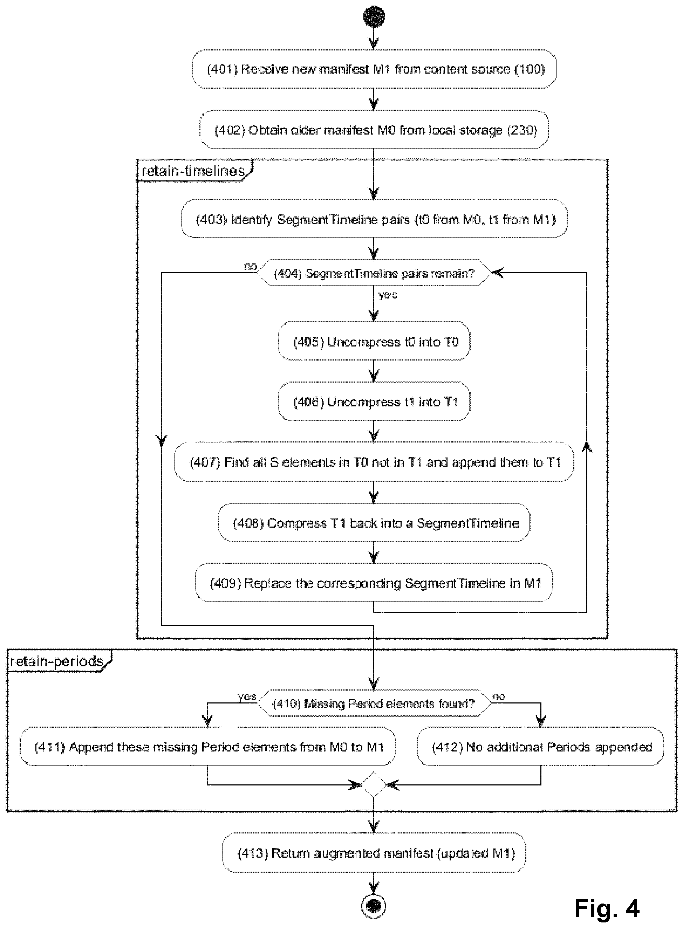

Referring to FIG. 4, there is shown a flowchart illustrating the AUGMENT algorithm performed by the intermediate device 200. In step 401, the intermediate device 200 receives the new manifest M1 from the content source 100, and in step 402, it obtains the older manifest M0 from local storage 230. At step 403, the device identifies pairs of SegmentTimeline elements in M0 and M1 that match by path.

The device then enters a loop (step 404) to process each SegmentTimeline pair. For each pair, at step 405, it uncompresses the t0 timeline from M0 into T0, and at step 406, uncompresses the t1 timeline from M1 into T1. At step 407, all S elements from T0 that are missing in T1 are appended to T1, thus adding older segment references. At step 408, T1 is compressed back into SegmentTimeline form, and at step 409, the corresponding SegmentTimeline in M1 is replaced with the merged one.

After all SegmentTimeline pairs are processed, at step 410410410 the device checks if there are any missing Period elements in M0 that are not present in M1. If so, at step 411 these Period elements are appended. Otherwise, step 412 indicates that no further additions occur. Finally, at step 413, the intermediate device 200returns the augmented manifest M1, now containing an extended set of segment references.

Once M1 is finalized at step 413, the intermediate device 200 stores this updated manifest M1 in its local storage 230, replacing M0. In other words, the last version of M1 becomes the new M0 for the next iteration, ensuring that the intermediate device 200 always has the most current augmented manifest available for future merging and processing.

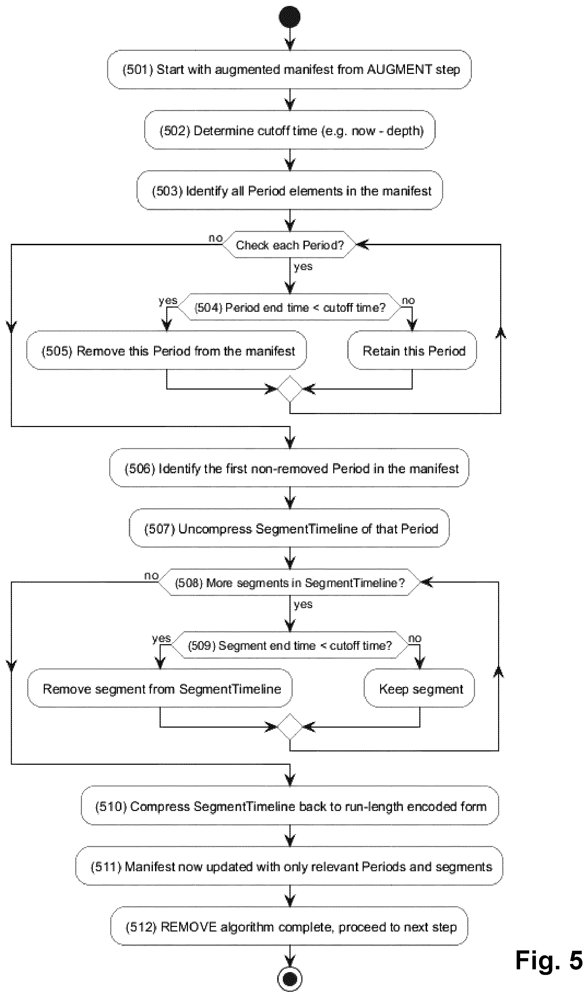

Referring to FIG. 5, there is shown a flowchart illustrating the REMOVE algorithm carried out by the intermediate device 200 after the AUGMENT algorithm has been applied to the manifest. At the start of the process (step 501), the intermediate device 200 begins with a manifest that has been augmented to include older segments and possibly entire older periods beyond the original timeshift window. In order to ensure that the manifest does not extend further back in time than desired, the device determines a cutoff time (step 502), for example, the current time minus a configured timeshift depth. This cutoff serves as a temporal boundary so that any content older than the cutoff time can be removed.

Once the cutoff time is established, the device identifies all Period elements within the manifest (step 503) and checks each Period's temporal extent. For each Period examined, the intermediate device 200 determines whether the Period's end time lies before the cutoff time. If so (step 504), that entire Period is removed from the manifest (step 505). Periods that include or extend into the permissible timeshift window are retained. By the end of this iteration, any Periods that are strictly earlier than the cutoff have been pruned from the manifest, leaving at least one Period that spans the current timeshift window.

The algorithm then focuses on the first remaining Period (step 506), extracting its SegmentTimeline. At this point, the SegmentTimeline is decompressed (step 507) to access the individual segments represented by a series of S elements. Each S element has a defined start time and duration, which together define the end time of that segment. The intermediate device 200 examines each segment (step 508) to determine if its end time is earlier than the cutoff. If it is (step 509), the segment is removed from the SegmentTimeline. By iterating through all segments, the device retains only those that lie within the desired timeshift window. After pruning is complete, the SegmentTimeline is recompressed into its run-length encoded form (step 510).

By the conclusion of the REMOVE algorithm (step 511), the manifest M1 contains only segments and periods within the configured timeshift window. Step 512 indicates that the REMOVE algorithm completes, with M1 now reflecting a controlled, extended buffer that no longer includes content lying entirely before the cutoff time.

Once the pruned manifest M1 is returned at step 512, the intermediate device 200 updates local storage 230 such that this version of M1 replaces the prior stored version M0. This ensures that the latest pruned manifest is recognized as the current baseline for future operations (e.g., subsequent merges or updates).

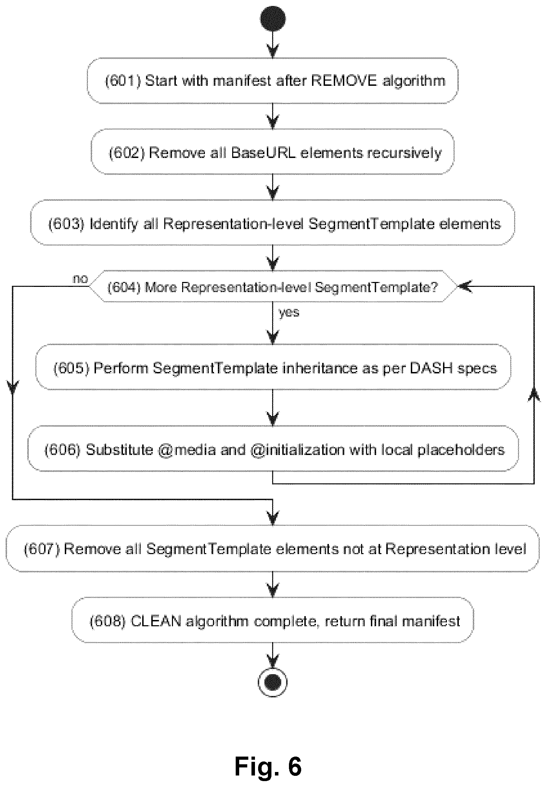

Referring to FIG. 6, there is shown a flowchart illustrating the CLEAN algorithm performed by the intermediate device 200 once the manifest has been augmented and pruned by the previous algorithms. At the start of the process (step 601), the device has a manifest that reflects the extended timeshift buffer and contains only those segments and periods within the desired temporal window. The CLEAN algorithm ensures that this manifest references locally cached segments instead of pointing to the original content source, thereby allowing the client 300 to seamlessly retrieve older segments from the intermediate device 200.

To achieve this, the device first removes all BaseURL elements (step 602) from the manifest, doing so recursively so that no absolute network paths remain. Once BaseURL elements are eliminated, the device identifies each SegmentTemplate element that is directly associated with a Representation (step 603). For each such Representation-level SegmentTemplate (step 604), the device performs inheritance of SegmentTemplate attributes (step 605) in accordance with DASH specifications. This inheritance ensures that each Representation-level SegmentTemplate fully specifies the URL construction rules.

Next, the device substitutes the SegmentTemplate@media and SegmentTemplate@initialization attributes (step 606) with relative URL placeholders that point to locally cached segments instead of remote URLs. By doing so, the intermediate device 200 ensures that when the client 300 attempts to retrieve a segment, it will request a locally served file from the intermediate device's cache 210, rather than contacting the content source 100. After all Representation-level SegmentTemplates have been processed in this manner, the device removes any SegmentTemplate elements found at higher hierarchy levels (step 607), leaving only those associated directly with Representations. This step guarantees that no ambiguous or conflicting templates remain.

At step 608, the CLEAN algorithm concludes, returning M1 in a form suitable for fully local playback of the extended timeshift. After completion of the CLEAN procedure at step 608, the device updates local storage 230 to store this finalized version of M1 as the new M0. Future iterations that merge newly received manifests or apply timeshift adjustments will thus begin from this locally cleaned version of the manifest, ensuring consistency in subsequent operations.

As a result, the final manifest delivered to the client 300 aligns perfectly with the intermediate device's local cache structure, ensuring seamless playback of extended timeshift segments without reliance on the original network paths.

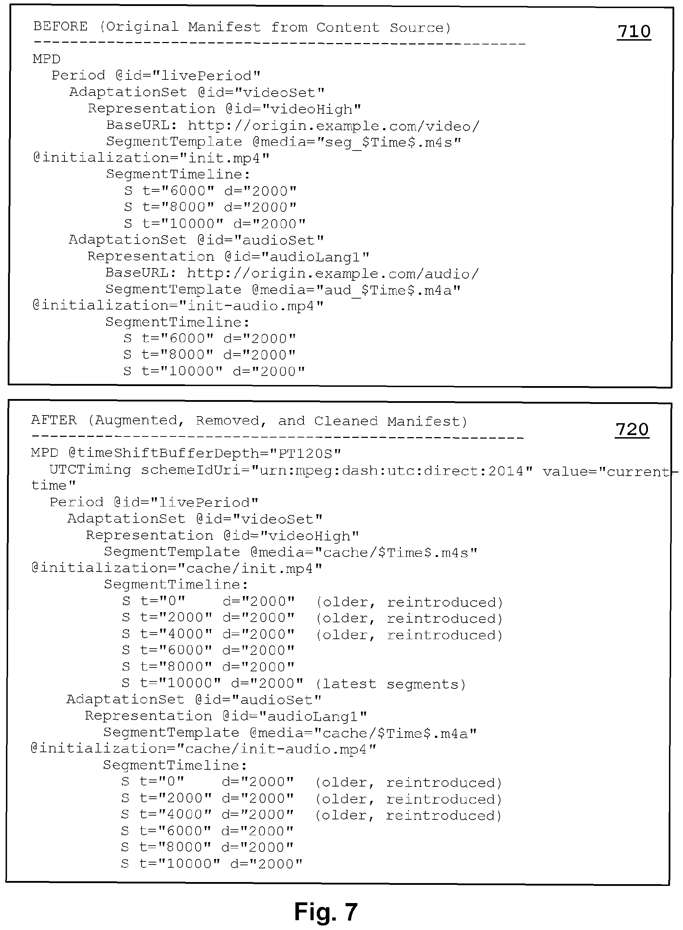

Referring to FIG. 7, there is shown a conceptual comparison of a manifest before (710) and after (720) the application of the AUGMENT and REMOVE algorithms described in previous figures, followed by the CLEAN algorithm. At the top portion (710), the manifest corresponds essentially to what the content source 100 currently provides-a short timeshift window limited to a set of recently produced segments. In this initial state, older segments that once formed part of the live timeline are no longer referenced. Additionally, segment references may include absolute URLs pointing back to the content source, and BaseURL elements may remain scattered throughout the manifest.

In the lower portion (720), the manifest is shown following the modifications performed by the intermediate device 200. The AUGMENT algorithm has merged older SegmentTimeline references, retrieved from previously stored manifest versions, into the live manifest. This integration of older segments is clearly visible as a longer SegmentTimeline, providing a timeshift window that extends further into the past. The REMOVE algorithm has subsequently pruned any segments and periods older than the configured cutoff time, ensuring that the extended timeshift remains within desired bounds. Finally, after CLEAN has been applied, the BaseURL elements are removed, and original segment URIs are replaced with local placeholders. As a result, all references point to the intermediate device's local cache 210, and the final manifest delivered to the client 300 not only offers an extended timeshift buffer, but also ensures direct local retrieval of older segments.

FIG. 7 thus provides a side-by-side illustration of how the original short-lived, source-dependent manifest transforms into a locally enriched, temporally extended manifest suitable for long-term timeshift navigation by the client 300.

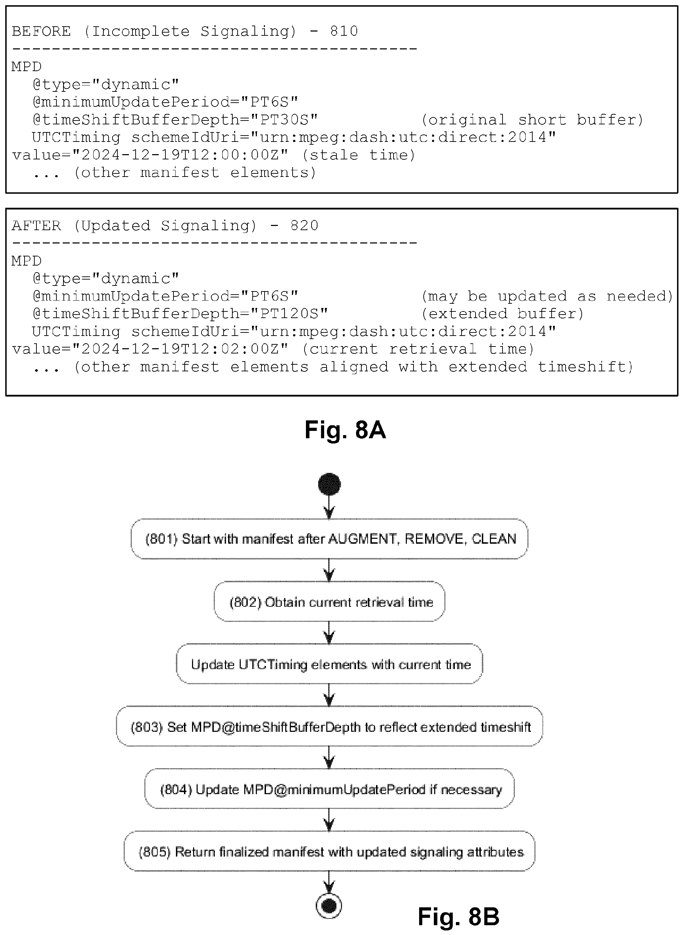

Referring to FIG. 8A, there is shown a simplified, comparative representation of a DASH manifest before (810) and after (820) the intermediate device 200 updates its signaling attributes. The upper portion (810) depicts the manifest as originally provided by the content source 100, with a limited timeShiftBufferDepth and an older UTCTiming value that reflects a past retrieval moment. In this initial state, the client 300 perceives only a short timeshift window and relies on outdated timing references.

The lower portion (820) of FIG. 8A shows the manifest after the intermediate device 200 has processed and extended the timeshift buffer using the AUGMENT, REMOVE, and CLEAN algorithms described previously. Having integrated older segments, the intermediate device 200 now sets the MPD@timeShiftBufferDepth to a longer duration (e.g., PT120S) and updates the UTCTiming element's value to the current retrieval time. This adjustment ensures that the client 300 aligns its playback timeline accurately with the now-extended timeshift window. Additionally, if needed, MPD@minimumUpdatePeriod is revised to indicate when the next manifest update should be expected. In this final state, the manifest fully and correctly signals the client 300 that a deeper historical buffer is available and how to interpret it.

Referring now to FIG. 8B, there is shown a flow diagram illustrating the step-by-step process carried out by the intermediate device 200 to achieve the updated signaling attributes represented in FIG. 8A. Initially (step 801), the intermediate device 200 starts with a manifest that has already undergone augmentation, removal of outdated content, and cleaning of references. At step 802, the device obtains a current reference time, ensuring that timing signals can be set accurately.

Using the current time obtained at step 802, the device updates the UTCTiming elements in the manifest, ensuring the client 300 is presented with a precise temporal reference. At step 803, the MPD@timeShiftBufferDepth attribute is set to the newly extended value, telling the client 300 how far back in time content segments can be requested. In step 804, the intermediate device 200 may also adjust MPD@minimumUpdatePeriod to inform the client 300 of the appropriate refresh interval for subsequent manifest updates.

Finally, at step 805, the intermediate device 200 returns the finalized manifest to the client 300, with all timing and timeshift signaling attributes properly aligned. Through the steps depicted in FIG. 8B, the intermediate device 200 transitions from the initial state shown in the top portion (810) of FIG. 8A to the updated and accurate signaling state shown in the bottom portion (820) of FIG. 8A. Thus, FIG. 8A provides a static "before-and-after" snapshot (810-820), while FIG. 8B details the dynamic process that brings about these changes, ensuring both figures are fully consistent and complementary.

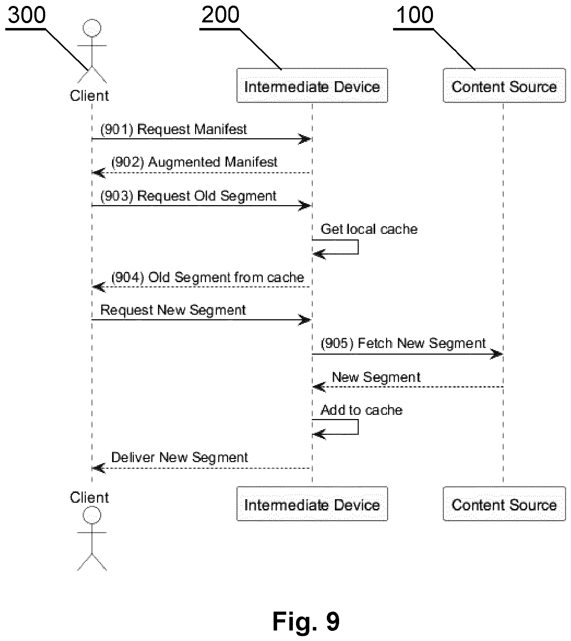

Referring now to FIG. 9, there is shown an illustrative sequence of interactions among the client 300, the intermediate device 200, and the content source 100 after the manifest has been fully prepared to reflect the extended timeshift window. Initially, the client 300 requests the live DASH manifest (step 901). The intermediate device 200, having already augmented and pruned older segments, cleaned the addressing scheme, and updated the signaling attributes, delivers the extended-timeshift manifest back to the client 300 (step 902).

Upon receiving the augmented manifest, which now indicates a deeper timeshift buffer, the client 300 selects segments for playback. If the client 300 wishes to retrieve a segment from the extended historical window (one that is no longer available at the content source 100), it issues an HTTP request to the intermediate device 200 for the corresponding segment (step 903). Instead of forwarding this request to the content source, the intermediate device 200 retrieves the requested segment directly from its local cache 210 (step 904). Because the intermediate device 200 previously stored older segments while continuously retrieving and merging manifests, it can now serve these historically removed pieces of content from its local resources.

If the client 300 later requests more recent segments that the intermediate device 200 does not yet have cached, the intermediate device 200 can fetch those from the content source 100 (step 905) and subsequently forward them to the client 300, potentially also adding them to its local cache for future use. As the stream progresses, periodic updates from the content source 100 allow the intermediate device 200 to continuously merge fresh segment data with previously stored segments, maintaining an extended timeshift buffer as described by the updated manifest.

Through this scenario, the client 300 experiences seamless playback of both recent and older segments as if the extended timeshift window were natively provided by the content source 100. The intermediate device 200 plays a dual role: on one hand, it keeps the timeline extended by caching and merging older data; on the other, it delivers the requested segments directly to the client 300, providing a richer viewing experience not originally available from the live feed alone.

It should be understood that the invention is not limited to the embodiments disclosed, but is intended to cover various modifications and equivalent arrangements. The claims, and all equivalents thereof, define the scope of the invention. No element, act, or instruction used in the description of the invention should be construed as critical or essential unless explicitly stated as such.

## Claims

1. A method of controlling the streaming of content to a client (300) from a content source (100) using a Dynamic Adaptive Streaming over HTTP (DASH) protocol, the method comprising, at an intermediate device (200) located between the content source (100) and the client (300):
receiving a manifest file (310) from the content source (100) in response to a request from the client (300) and editing the received manifest file (310) before delivering it to the client (300), the manifest file (310) including at least one Uniform Resource Identifier (URI) identifying a content element, **characterized in that** the method further comprises:
maintaining, at the intermediate device (200), a local cache (210) of previously obtained segments of the content element;
augmenting the manifest file (310) with information from a previously stored version of a manifest for the same content element, retrieved from a memory (230), that includes older segment references not present in the received manifest file (310), so as to extend an available timeshift duration beyond the timeshift depth visible in the received manifest;
removing, from the augmented manifest, outdated periods (320) and segment references within a SegmentTimeline (350) whose end times precede a selected cutoff, thereby pruning obsolete content while preserving a continuous timeline of available segments;
cleaning the augmented manifest by removing all BaseURL elements, performing SegmentTemplate inheritance for representations (340), and substituting original media and initialization segment references with relative URL placeholders that refer to the locally cached segments in the local cache (210); and
updating manifest attributes, including a timeShiftBufferDepth attribute and UTCTiming elements (311), to signal to the client (300) that a locally extended timeshift buffer is available, thereby enabling the client (300) to access historical segments beyond the timeshift depth initially provided by the content source (100).

2. The method according to claim 1, wherein augmenting the manifest file (310) comprises identifying matching SegmentTimeline elements in the previously stored version of the manifest and merging missing segment references (S elements) into the current SegmentTimeline (350).

3. The method according to claim 1 or 2, wherein removing outdated segment references comprises decompressing the SegmentTimeline (350) into individual S elements, discarding those with end times before the cutoff, and recompressing the SegmentTimeline (350) using run-length encoding.

4. The method according to any one of the preceding claims, wherein cleaning the augmented manifest includes recursively removing BaseURL elements from all levels of the manifest hierarchy.

5. The method according to any one of the preceding claims, wherein updating manifest attributes further comprises setting MPD@minimumUpdatePeriod to indicate a schedule for future manifest updates from the intermediate device (200).

6. The method according to any one of the preceding claims, wherein the intermediate device (200) periodically obtains new manifest versions from the content source (100) and merges them with previously stored data to maintain a continuously extended timeshift buffer.

7. The method according to any one of the preceding claims, further comprising adding references in the augmented manifest to older segments that were previously omitted by the manifest received from the content source, and serving these older segments directly from the local cache (210) to the client (300).

8. A system for controlling the streaming of content to a client (300) from a content source (100) using a Dynamic Adaptive Streaming over HTTP (DASH) protocol, the system comprising an intermediate device (200) arranged in a data path between the content source (100) and the client (300), the intermediate device (200) being configured to receive a manifest file (310) from the content source (100) and to send an edited version of the manifest file (310) to the client (300):
the intermediate device (200) including a manifest editing capability for modifying the manifest file (310) before sending it to the client (300), the manifest file (310) including at least one URI identifying a content element,
**characterized in that** the intermediate device (200) is further configured to:
maintain a local cache (210) of previously obtained segments of the content element;
apply an augmentation procedure to merge older segment timeline information, retrieved from previously stored manifest data in a memory (230), that is missing from the received manifest file (310), with newly obtained manifest data, thereby extending the available timeshift duration;
remove outdated segment references and entire periods (320) that precede a defined cutoff time, while retaining a continuous timeline of accessible segments within the SegmentTimeline (350);
perform a cleaning procedure that removes all BaseURL elements, inherits SegmentTemplate attributes into Representation-level SegmentTemplate elements associated with representations (340), and replaces original segment references with relative placeholders referring to the locally cached segments in the local cache (210); and
update attributes of the manifest, including timeShiftBufferDepth and UTCTiming elements (311), to indicate to the client (300) the availability of an extended timeshift buffer locally constructed from the cached segments.

9. The system according to claim 8, wherein the intermediate device (200) is configured to decompress and recompress SegmentTimeline (350) entries during the removing step to implement run-length encoding of segment references.

10. The system according to claim 8 or 9, wherein the intermediate device (200) is configured to recursively remove BaseURL elements from multiple hierarchical levels of the manifest during the cleaning procedure.

11. The system according to any one of claims 8 to 10, wherein the intermediate device (200) periodically retrieves updated manifest versions from the content source (100) and merges them with previously stored data in the memory (230) to maintain the extended timeshift buffer continuously.

12. The system according to any one of claims 8 to 11, wherein the intermediate device (200) comprises a timing controller (240) adapted to set MPD@minimumUpdatePeriod to signal the client (300) when subsequent updates of the manifest are expected.

13. The system according to any one of claims 8 to 12, wherein the intermediate device (200) is further configured to reintroduce references in the augmented manifest for older segments that were omitted by the manifest received from the content source (100), and to provide these reintroduced older segments directly from the local cache (210) to the client (300).

14. The system according to any one of claims 8 to 13, wherein the intermediate device (200) implements the AUGMENT, REMOVE, and CLEAN procedures in succession to continuously present a coherent and extended timeshift buffer to the client (300).
